# FASCICULE DE BREVET EUROPEEN

(11) **EP 3 692 270 B1**
(45) Date de publication et mention de la délivrance du brevet: **22.11.2023**
(21) Numéro de dépôt: 17780727.8
(22) Date de dépôt: 06.10.2017
(51) Int. Cl.: F16B 39/28

(54) **SYSTÈME DE FIXATION**
BEFESTIGUNGSSYSTEM
ATTACHMENT SYSTEM

(43) Date de publication de la demande: 12.08.2020
(73) Titulaire: Mustad Belgium SA, 4700 Eupen (BE)
(72) Inventeur: BRUYÈRE, René, 4671 Housse (BE)
(74) Mandataire: Gevers Patents
(86) Numéro de dépôt international: PCT/EP2017/075454
(87) Numéro de publication internationale: WO 2019/068339

(56) Documents cités:
- FR-A1- 2 321 625
- US-A- 10 368

## Description

### Domaine technique

La présente invention concerne un système d'écrou à verrouillage positif automatique. Le système d'écrou comprend un ensemble de fixation et un organe fileté, l'ensemble de fixation étant agencé pour recevoir l'organe fileté.

### Art antérieur

Le document FR2321625 décrit un système d'écrou comprenant un organe fileté, un écrou, une rondelle et un jonc. La rondelle est prévue pour être reçue dans l'écrou. L'organe fileté est prévu pour être reçu dans l'écrou et la rondelle. Le jonc est prévu pour être reçu de façon lâche dans une rainure circulaire autour de la rondelle. La rondelle comprend des cannelures longitudinales symétriques qui permettent de bloquer en rotation l'organe fileté grâce à des cannelures symétrique correspondantes présentes sur le filet de l'organe fileté. Un autre système est connu du document US10368A.

Pour assembler ce système d'écrou connu, il faut d'abord visser l'organe fileté dans une extrémité de l'écrou puis mettre en place la rondelle munie du jonc dans l'autre extrémité de l'écrou. Le blocage se fait alors par emboitement des cannelures de l'organe fileté dans les cannelures de la rondelle.

Il faut donc manipuler l'organe fileté, l'écrou et la rondelle munie du jonc, ce qui fait trois objets. Cela rend l'assemblage fastidieux car cela demande de l'attention et prend du temps. C'est d'autant plus fastidieux que le jonc ne tient pas bien sur la rondelle et qu'il faut veiller à ce qu'il n'en glisse pas.

En outre, l'assemblage du système connu requiert que les deux extrémités de l'écrou soient accessibles et n'est pas possible avec une machine automatique.

En outre, ce système connu n'est pas démontable car il n'est pas possible de retirer la rondelle une fois que celle-ci est en place.

### Résumé de l'invention

Un objet de l'invention est de fournir un système de fixation facile et rapide à assembler et aisément démontable.

A cet effet, l'invention propose un ensemble de fixation étant destiné à recevoir un organe fileté, l'ensemble de fixation et l'organe fileté étant tous les deux compris dans un système de fixation selon l'invention.

Selon un premier aspect, l'invention, propose un ensemble de fixation destiné à recevoir un organe fileté et comprenant:
- une rondelle ayant une paroi interne pourvue de cannelures,
- un écrou agencé pour recevoir au moins une partie de la rondelle,
l'ensemble de fixation étant agencé pour que la rondelle soit bloquée longitudinalement et en rotation lorsqu'elle est au moins partiellement reçue dans l'écrou,
caractérisé en ce que les cannelures de la rondelle sont asymétriques et agencées pour permettre une rotation de l'organe fileté dans un seul sens de rotation.

Comme les cannelures sont asymétriques et agencées pour permettre une rotation uniquement dans un sens de l'organe fileté, l'organe fileté peut être vissé au couple voulu dans ce sens dans l'ensemble de fixation après que la rondelle a été mise en place dans l'écrou. Ensuite, l'organe fileté est bloqué puisque la rotation dans l'autre sens est bloquée. Le système de fixation est donc assemblé en utilisant uniquement deux objets: l'ensemble de fixation et l'organe fileté. Le système formé par l'ensemble de fixation et l'organe fileté peut donc être automatiquement verrouillé tout en gardant le couple de serrage d'installation.

Dans le système décrit dans le document FR2321625, les cannelures de la rondelle sont symétriques. Elles sont donc bloquantes dans les deux sens de rotation pour les cannelures de l'organe fileté. C'est la raison pour laquelle il n'est pas possible de visser l'organe fileté sur l'écrou une fois que la rondelle a été introduite dans l'écrou. En d'autres termes, le seul mouvement relatif possible entre la rondelle et l'organe fileté est un mouvement longitudinal. C'est d'ailleurs un tel mouvement longitudinal qui est pratiqué lorsque la rondelle est mise en place dans l'écrou après que l'organe fileté a été vissé dans l'écrou.

L'ensemble de fixation selon l'invention ne nécessite pas d'outil particulier lors de la fixation de l'organe fileté. Un tournevis ou une clé, par exemple une clé hexagonale, suffit pour visser l'organe fileté dans l'ensemble de fixation. Ce vissage peut être réalisé par une visseuse électrique, éventuellement automatique.

Pour enlever l'organe fileté de l'ensemble de fixation, il est préférable de débloquer la rondelle longitudinalement, puis d'enlever la rondelle.

Les cannelures asymétriques peuvent être dites "en dents de scie".

L'agencement des cannelures pour permettre une rotation de l'organe fileté uniquement dans un sens peut être dénommé "agencement par encliquetage", "agencement de cliquet" ou "agencement permettant une déformation mécanique des cannelures dans un seul sens de rotation".

Le système est particulièrement robuste car il ne comprend de préférence que deux pièces une fois que les différents éléments de l'ensemble de fixation sont assemblés : l'ensemble de fixation et l'organe fileté. En effet, les éléments de l'ensemble de fixation sont alors fixés et immobiles les uns par rapport aux autres puisque la rondelle est bloquée à la fois longitudinalement et en rotation.

Les éléments de l'ensemble de fixation sont de forme simple. Ils sont donc bons marché et faciles à fabriquer.

Dans le cadre du présent, un premier élément « reçu » dans un deuxième élément peut être partiellement ou totalement reçu dans ledit deuxième élément.

De préférence, la rondelle tient en une seule pièce.

La rondelle dont la surface interne est pourvue de cannelures peut aussi être dénommée « rondelle crantée ». La rondelle peut être appelée « première rondelle ».

De préférence, l'écrou comprend un filetage interne. L'écrou peut par exemple avoir une surface externe de section hexagonale ou circulaire.

Les cannelures forment un moyen de verrouillage.

Les cannelures sont de préférence longitudinales.

Le seul sens de rotation possible peut être appelé « premier sens de rotation ». L'autre sens de rotation, qui est bloqué grâce à l'invention, peut être appelé « deuxième sens de rotation ».

Le blocage en rotation de la rondelle empêche la rotation de la rondelle lors du vissage de l'organe fileté et ensuite le dévissage de l'organe fileté grâce à l'encliquetage des cannelures.

L'ensemble de fixation comprend de préférence un moyen de blocage rotationnel de la rondelle permettant d'empêcher que la rondelle ne tourne quand elle est disposée dans l'écrou. Ce moyen de blocage rotationnel peut comprendre un agencement particulier de l'écrou et de la rondelle et/ou un élément de blocage en plus de l'écrou et de la rondelle.

L'ensemble de fixation comprend de préférence un moyen de blocage longitudinal de la rondelle permettant d'empêcher que la rondelle ne se déplace longitudinalement quand elle est disposée dans l'écrou. Ce moyen de blocage longitudinal peut comprendre un agencement particulier de l'écrou et de la rondelle et/ou un élément de blocage en plus de l'écrou et de la rondelle. Par exemple, la forme et les dimensions de l'écrou peuvent être telles que la rondelle est bloquée dans un sens par une paroi transversale de l'écrou et est bloquée dans le sens inverse par une autre paroi transversale de l'écrou ou par un élément de retenue.

Dans un mode de réalisation de l'invention, l'écrou a une nervure annulaire intérieure, ou rainure, destinée à recevoir au moins une partie de la rondelle.

Dans le cadre du présent document, une "cannelure" est une rainure, de préférence longitudinale. Elle a de préférence une première paroi latérale et une deuxième paroi latérale.

Dans le cadre du présent document, une "cannelure symétrique" dans un corps ayant essentiellement une symétrie cylindrique est préférentiellement symétrique par rapport à une direction radiale. De préférence, la première paroi latérale de la cannelure est symétrique par symétrie orthogonale par rapport à la deuxième paroi latérale de la cannelure dans un plan radial.

Dans le cadre du présent document, une "cannelure asymétrique" dans un corps ayant essentiellement une symétrie cylindrique est préférentiellement asymétrique par rapport à une direction radiale. De préférence, la première paroi latérale de la cannelure est asymétrique par symétrie orthogonale par rapport à la deuxième paroi latérale de la cannelure dans un plan radial. Par exemple, des cannelures à l'intérieur d'une surface localement cylindrique peuvent être inclinées dans une direction correspondant à un sens horaire ou antihoraire. Elles sont de préférence inclinées à droite si le filet est droit et à gauche si le filet est gauche.

Dans le cadre du présent document, une "rotation" d'une pièce ayant essentiellement une symétrie cylindrique est une rotation autour de l'axe de symétrie cylindrique de cette pièce.

Dans le cadre du présent document, une direction "longitudinale" est de préférence une direction essentiellement parallèle à une direction d'introduction de l'organe fileté dans l'ensemble de fixation.

De préférence, l'écrou comprend
a. un corps creux, et
b. une jupe agencée pour recevoir au moins une partie de la rondelle.

De préférence, le corps de l'écrou comprend un filetage interne.

L'ensemble de fixation peut par exemple comprendre un ou plusieurs des matériaux suivants: métal, acier, titane, polymère, plastique, plastique injecté, matériau composite, matériau alvéolé, matériau sous forme de treillis ou de nid d'abeilles.

Dans un mode de réalisation de l'invention, les surfaces des différents éléments de l'ensemble de fixation sont pleines et le volume interne d'au moins une partie de l'ensemble de fixation est fait d'un treillis. Cela permet de diminuer le poids de l'ensemble de fixation. Par exemple, au moins une partie de l'intérieur de l'organe fileté peut être fait d'un treillis.

L'ensemble de fixation peut par exemple être au moins partiellement réalisé par un ou plusieurs des procédés suivants: usinage, impression 3D, injection, décolletage. L'écrou peut par exemple avoir une section circulaire et être réalisé par décolletage.

Dans un mode de réalisation de l'invention, la rondelle est élastique.

De préférence, l'élasticité de la rondelle est au moins radiale. L'élasticité de la rondelle peut être liée à sa forme et/ou à son matériau. Cette élasticité permet que la rondelle augmente en diamètre à chaque passage des cannelures puis de diminuer en diamètre afin de faciliter le blocage par encliquetage. De préférence, la rondelle est suffisamment élastique pour que son diamètre diminue suffisamment pour permettre la rotation dans un seul sens de l'organe fileté dans la rondelle.

Dans un mode de réalisation de l'invention, la rondelle est fendue.

La fente de la rondelle la rend capable d'augmenter en diamètre à chaque passage des cannelures puis de diminuer en diamètre afin de faciliter l'encliquetage. Cette fente la rend aussi particulièrement facile à mettre en place dans l'écrou et à retirer de l'écrou. De préférence, la rondelle n'a qu'une seule fente.

Dans un mode de réalisation de l'invention, l'ensemble de fixation comprend un élément de retenue agencé pour bloquer longitudinalement la rondelle dans l'écrou.

L'élément de retenue est un élément différent de l'écrou : ce n'est pas une partie de l'écrou. L'élément de retenue permet de rendre la rondelle solidaire de l'écrou. De préférence, l'élément de retenue bloque la rondelle contre une paroi transversale interne de l'écrou. De préférence, l'élément de retenue est logé au moins partiellement dans une première rainure de l'écrou. De préférence, il suffit d'enlever l'élément de retenue pour désolidariser la rondelle de l'écrou. Il faut alors enlever la rondelle pour enlever l'organe fileté.

Dans un mode de réalisation de l'invention, l'élément de retenue est un anneau, de préférence fendu, et l'écrou comprend une première rainure agencée pour loger au moins partiellement l'anneau.

Dans le cadre du présent document, un "anneau fendu" est un anneau comprenant une fente. La fente est préférentiellement dans une direction d'un rayon de l'anneau. Il peut aussi être appelé anneau expansif, anneau de retenue, "circlip" en anglais ou "snap ring" en anglais. La fente de l'anneau lui permet d'être inséré facilement dans une rainure interne de l'écrou. L'anneau fendu peut par exemple être formé par un fil de fer mis en forme de U ou de fer à cheval.

Dans un mode de réalisation de l'invention, l'écrou comprend une cavité qui comporte la première rainure et une deuxième rainure agencée pour recevoir une partie de la rondelle. De préférence, le diamètre de la deuxième rainure est différent du diamètre de la première rainure. De préférence, le diamètre de la deuxième rainure est plus grand que le diamètre de la première rainure. De préférence, la première rainure est située entre la deuxième rainure et une ouverture de la cavité prévue y introduire la rondelle et l'anneau.

L'anneau est un élément de retenue particulièrement simple, bon marché et robuste.

L'anneau est monté dans l'écrou après le montage de la rondelle dans l'écrou. Cela rend le montage de l'ensemble de fixation particulièrement aisé.

De préférence, le diamètre extérieur de l'anneau est inférieur au diamètre extérieur de la rondelle.

Dans un mode de réalisation de l'invention, l'ensemble de fixation comprend un moyen de blocage rotationnel de la rondelle.

Celui-ci permet d'assurer le blocage en rotation de la rondelle lorsqu'elle est reçue dans l'écrou. Le moyen de blocage rotationnel peut comprendre des parties de l'écrou, de la rondelle et/ou des éléments supplémentaires par rapport à l'écrou et la rondelle.

Dans un mode de réalisation de l'invention, le moyen de blocage rotationnel comprend:
- une encoche dans l'écrou, l'encoche débouchant dans une cavité de l'écrou agencée pour recevoir une partie de la rondelle, et
- une patte de la rondelle,
la patte et l'encoche étant agencées pour empêcher une rotation de la rondelle lorsque la patte est logée au moins partiellement dans l'encoche.

De préférence, la patte bloque contre les bords de l'encoche si la rondelle est entrainée en rotation, ce qui empêche la rotation de la rondelle.

La patte s'étend de préférence radialement vers l'extérieur à partir de la rondelle. La largeur de la patte est de préférence légèrement inférieure à la largeur de l'encoche de façon à ce que la patte puisse facilement être insérée dans l'encoche tout en minimisant le jeu entre elles.

Dans un mode de réalisation de l'invention, la fente de la rondelle est contigüe à une patte de la rondelle.

Dans un mode de réalisation de l'invention, le moyen de blocage rotationnel comprend:
- une goupille,
- un trou dans l'écrou agencé pour recevoir au moins une partie de la goupille et débouchant dans une cavité de l'écrou agencée pour recevoir au moins une partie de la rondelle, et
- un trou dans la rondelle agencé pour recevoir une extrémité de la goupille.

La goupille permet de bloquer la rotation de la rondelle par rapport à l'écrou. La goupille comprend de préférence un trou traversant longitudinal.

Le trou dans la rondelle est de préférence une fente.

La goupille est de préférence élastique. Ainsi, le diamètre de la goupille peut légèrement diminuer puis revenir à sa longueur de repos. Cela permet d'insérer facilement la goupille en la compressant radialement, puis qu'elle se bloque lorsqu'elle revient à son état de repos.

La deuxième rainure de l'écrou fait de préférence partie de la cavité de l'écrou destinée à recevoir au moins partiellement la rondelle.

Dans un mode de réalisation de l'invention, la goupille comprend une fente longitudinale.

Cette fente confère une certaine élasticité radiale à la goupille.

Dans un mode de réalisation de l'invention, le trou agencé pour recevoir au moins une partie de la goupille a essentiellement une direction longitudinale.

Dans un mode de réalisation de l'invention, la paroi interne de la rondelle inclut une section circulaire comprenant une partie dépourvue de cannelures et une partie pourvue de cannelures.

En d'autres termes, dans ce mode de réalisation de l'invention, il existe un pourtour interne de la rondelle qui n'est que partiellement couvert de cannelures. Ainsi, les cannelures sont présentes sur uniquement une partie de cercle le long de la paroi interne de la rondelle.

Cela permet de diminuer le couple nécessaire pour faire tourner l'organe fileté dans la rondelle.

De préférence, la partie pourvue des cannelures est contigüe à une fente de la rondelle.

Cela permet de diminuer encore plus le couple nécessaire pour faire tourner l'organe fileté dans la rondelle car cette partie de la rondelle peut facilement s'écarter radialement lors du passage des dents de l'organe fileté.

Ladite section circulaire peut comprendre plusieurs parties dépourvues de cannelures et plusieurs parties pourvues de cannelures.

De préférence, chaque partie dépourvue de cannelures et chaque partie pourvue de cannelures correspond à un intervalle angulaire donné.

De préférence, la partie dépourvue de cannelures est lisse.

Selon un mode de réalisation de l'invention, les cannelures ne sont présentes que dans un intervalle angulaire préférentiellement inférieur à 270°, plus préférentiellement inférieur à 180°, encore plus préférentiellement inférieur à 90°.

Il est aussi possible, tout en restant dans le cadre de l'invention, que la paroi interne de la rondelle ne comprenne que des sections circulaires totalement couvertes de cannelures. Ainsi, les cannelures sont réparties tout le long d'un cercle le long de la paroi interne de la rondelle. Il est aussi possible, tout en restant dans le cadre de l'invention, que la paroi interne de la rondelle comprenne une première section circulaire comprenant une partie dépourvue de cannelures et une partie pourvue des cannelures, et une deuxième section circulaire totalement couverte de cannelures.

Il est aussi possible, tout en restant dans le cadre de l'invention, que la paroi interne de la rondelle comprenne :
- une première section circulaire comprenant une partie dépourvue de cannelures et une partie pourvue des cannelures, et
- une deuxième section circulaire comprenant une partie dépourvue de cannelures et une partie pourvue des cannelures,
agencées de façon telle que les parties pourvues de cannelures de la première et de la deuxième sections soient décalées angulairement.

De préférence, leur décalage est inférieur à l'angle fait par une cannelure, de façon à diminuer le desserrage possible après encliquetage.

Dans un mode de réalisation de l'invention, l'ensemble de fixation comprend des cannelures additionnelles en décalage angulaire et longitudinal par rapport à certaines cannelures de la paroi interne de la rondelle.

De préférence, ces cannelures additionnelles sont présentes une deuxième rondelle elle aussi au moins partiellement logée dans l'écrou et faisant partie de l'ensemble de fixation. Il peut ainsi y avoir une troisième rondelle, une quatrième rondelle,... ayant chacune des cannelures décalées radialement afin de diminuer le jeu. Les rondelles sont de préférences contigües.

Il est possible, tout en restant dans le cadre de l'invention, que les cannelures additionnelles soient présentes sur la première rondelle, au lieu ou en plus d'être sur la deuxième rondelle.

Les cannelures additionnelles s'imbriquent sur des cannelures de l'organe fileté avec un décalage longitudinal par rapport à au moins certaines des cannelures de la paroi interne de la rondelle. Cela permet donc un encliquetage sur différentes sections transversales du filetage de l'organe fileté. Il est ainsi possible de diminuer le desserrage possible après encliquetage. En effet, grâce au décalage angulaire, ces cannelures additionnelles assurent un blocage à des angles différents.

Dans un mode de réalisation de l'invention, la paroi interne de la rondelle est pourvue de cannelures placées en une ou plusieurs spirales. Chacune des spires comprend alors des cannelures décalées longitudinalement et angulairement par rapport aux autres spires.

Dans un mode de réalisation de l'invention, la rondelle comporte un chanfrein situé à une extrémité d'un trou traversant de la rondelle agencé pour recevoir au moins partiellement l'organe fileté.

Ce chanfrein est destiné à être placé vers l'avant lorsque la rondelle est placée dans l'écrou. Il permet de faciliter l'insertion de l'extrémité de l'organe fileté dans la rondelle.

Selon un deuxième aspect, l'invention propose un organe fileté destiné à être reçu dans un ensemble de fixation et comprenant une paroi externe pourvue de cannelures asymétriques et agencées pour permettre une rotation de l'ensemble de fixation dans un seul sens de rotation.

L'organe fileté peut par exemple être une vis. Les cannelures de l'organe fileté peuvent être appelées "cannelures externes". Les cannelures de la rondelle peuvent être appelées "cannelures internes". Les cannelures de l'organe fileté sont prévues pour coopérer avec celles de la rondelle. De préférence, les dents formées par les cannelures de la rondelle correspondent aux creux des cannelures de l'organe fileté et les dents formées par les cannelures de l'organe fileté correspondent aux creux des cannelures de la rondelle.

Dans un mode de réalisation de l'invention, les cannelures de l'organe fileté sont situées sur une crête du filet qui est en spirale.

Selon un troisième aspect, l'invention propose un système de fixation comprenant un ensemble de fixation selon l'un des modes de réalisation de l'invention et un organe fileté selon l'un des modes de réalisation de l'invention, la rondelle étant assemblée avec l'écrou pour former au moins une partie de l'ensemble de fixation et l'organe fileté étant vissé dans l'ensemble de fixation.

Selon un quatrième aspect, l'invention propose une méthode de fixation d'un organe fileté et comprenant les étapes de:
- monter un ensemble de fixation en insérant, au moins partiellement, une rondelle dans un écrou de façon à ce que la rondelle soit bloquée longitudinalement et en rotation dans l'écrou, la rondelle ayant une paroi interne pourvue de cannelures asymétriques agencées pour permettre une rotation de l'organe fileté dans un seul sens de rotation, et
- visser l'organe fileté dans l'ensemble de fixation par une rotation dans ledit sens de rotation, l'organe fileté ayant une paroi externe pourvue de cannelures asymétriques prévues pour coopérer avec celles de la rondelle.

Les avantages mentionnés pour le dispositif s'appliquent mutatis mutandis à la méthode.

L'organe fileté est d'abord inséré et vissé dans un filetage de l'écrou. Lors de sa progression dans l'ensemble de fixation, son extrémité rentre dans le trou de la rondelle. A partir de ce moment, un encliquetage se produit entre les cannelures de l'organe fileté et les cannelures de la rondelle, empêchant toute rotation en sens inverse.

Dans un mode de réalisation de l'invention, le montage de l'ensemble de fixation comprend le montage sur l'écrou et/ou sur la rondelle d'un moyen de blocage rotationnel de la rondelle, par exemple une goupille. Dans un mode de réalisation de l'invention, le montage de l'ensemble de fixation comprend le montage sur l'écrou et/ou sur la rondelle d'un moyen de blocage longitudinal de la rondelle, par exemple un anneau de blocage.

### Brève description des figures

D'autres caractéristiques et avantages de l'invention apparaîtront à la lecture de la description détaillée qui suit pour la compréhension de laquelle on se reportera aux figures annexées parmi lesquelles :
- la figure 1 est une vue schématique tridimensionnelle d'un organe fileté selon un mode de réalisation de l'invention ;
- la figure 2 est une vue schématique tridimensionnelle d'un écrou selon un premier mode de réalisation de l'invention ;
- la figure 3 est une vue schématique tridimensionnelle d'une rondelle selon un premier mode de réalisation de l'invention ;
- la figure 4a est une vue en coupe transversale illustrant les positions de la rondelle et de l'organe fileté lorsque celui-ci est en place dans un ensemble de fixation selon un mode de réalisation de l'invention ;
- la figure 4b est une vue en coupe transversale illustrant les positions de la rondelle et de l'organe fileté lorsque celui-ci est en place dans un ensemble de fixation selon un autre mode de réalisation de l'invention ;
- la figure 5 est un agrandissement d'une partie de la figure 4a ou de la figure 4b ;
- la figure 6 est une vue schématique tridimensionnelle d'un anneau selon un mode de réalisation de l'invention ;
- la figure7 est une vue en coupe d'un exemple d'ensemble de fixation selon le premier mode de réalisation de l'invention ;
- la figure 8 illustre un écrou selon un deuxième mode de réalisation de l'invention ;
- la figure 9 illustre une rondelle selon le deuxième mode de réalisation de l'invention ;
- la figure 10 illustre une goupille qui peut faire partie de l'ensemble de fixation selon le deuxième mode de réalisation de l'invention ; et
- la figure 11 est une vue en coupe d'un exemple d'ensemble de fixation selon le deuxième mode de réalisation de l'invention.

### Modes de réalisation de l'invention

La présente invention est décrite avec des réalisations particulières et des références à des figures mais l'invention n'est pas limitée par celles-ci. Les dessins ou figures décrits ne sont que schématiques et ne sont pas limitants.

Dans le contexte du présent document, les termes « premier » et « deuxième » servent uniquement à différencier les différents éléments et n'impliquent pas d'ordre entre ces éléments.

Sur les figures, les éléments identiques ou analogues peuvent porter les mêmes références.

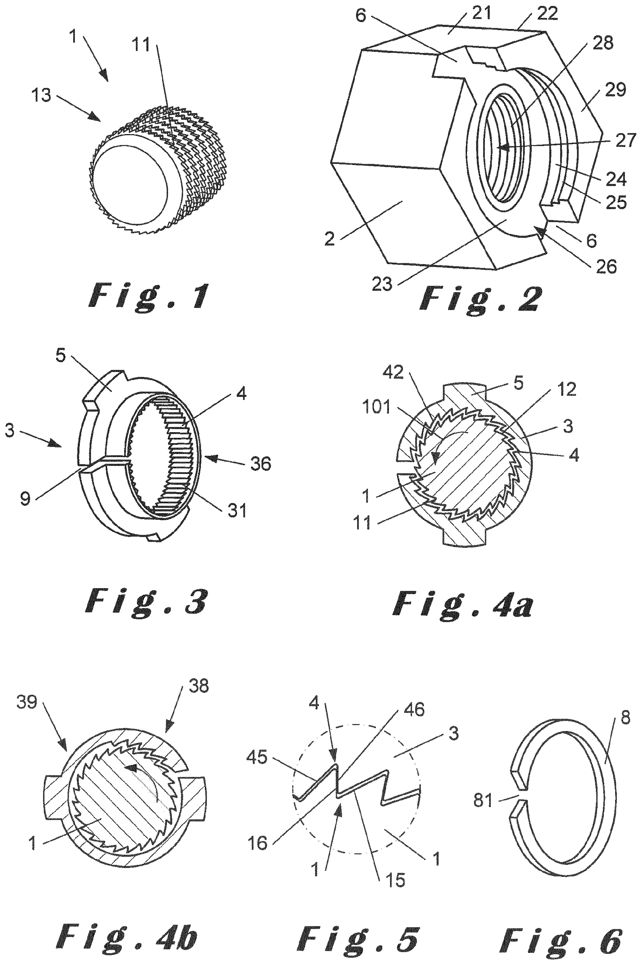

La figure 1 est une vue schématique tridimensionnelle d'un organe fileté 1 selon un mode de réalisation de l'invention. L'organe fileté 1 présente un filet sur une paroi externe 13. La paroi externe 13 comprend des cannelures externes 11, de préférence situées sur la crête du filet. Les cannelures externes 11 sont asymétriques. Elles sont de préférences longitudinales.

La figure 2 est une vue schématique tridimensionnelle d'un écrou 2 selon un premier mode de réalisation de l'invention. L'écrou 2 comprend un corps d'écrou 21 qui se termine vers l'arrière par une jupe 22.

L'écrou 2 comprend un trou 27 pourvu d'un filetage 28 interne de même pas que le filetage de l'organe fileté 1. Le trou 27 débouche de préférence sur une face avant (non-illustrée) de l'écrou 2. Le trou 27 est de préférence situé dans le corps d'écrou 21.

L'écrou 2 comprend une cavité 26 prévue pour recevoir au moins partiellement une rondelle 3 (visible figure 3). La cavité 26 débouche de préférence sur une face arrière 29 de l'écrou 2. La cavité 26 se situe de préférence dans la jupe 22. De préférence, le trou 27 et la cavité 26 forment un trou traversant l'écrou 2 selon une direction longitudinale.

Dans un mode de réalisation de l'invention, la cavité 26 se termine par une paroi transversale 23 qui permet de bloquer longitudinalement la rondelle 3 vers l'avant. Le trou 27 débouche dans la cavité 26 par cette paroi transversale 23. La paroi transversale 23 peut aussi être dénommée « paroi de fond ».

Dans un mode de réalisation de l'invention, la cavité 26 comporte une première rainure 25 agencée pour recevoir au moins partiellement un anneau 8 qui permet de bloquer la rondelle 3 longitudinalement vers l'arrière.

Dans un mode de réalisation de l'invention, la cavité 26 comporte une deuxième rainure 24 agencée pour recevoir une partie de la rondelle 3. De préférence, le diamètre de la deuxième rainure 24 est plus grand que le diamètre de la première rainure 25. La première rainure 25 est située vers l'arrière par rapport à la deuxième rainure 24.

Dans le premier mode de réalisation de l'invention, l'écrou 2 comprend aussi deux encoches 6 qui sont destinées à recevoir au moins partiellement des pattes 5 de la rondelle 3 (voir figure 3), afin de bloquer toute rotation de la rondelle 3. Les encoches 6 débouchent dans la cavité 26. Les encoches 6 sont de préférence dans la jupe 22. Les encoches 6 débouchent de préférence sur la face arrière 29 de l'écrou 2.

La figure 3 est une vue schématique tridimensionnelle d'une rondelle 3 selon un premier mode de réalisation de l'invention. La rondelle 3 a une paroi interne 31 essentiellement cylindrique et pourvue de cannelures internes 4 asymétriques. La rondelle 3 a un trou 36 qui la traverse de façon longitudinale. La rondelle 3 a de préférence une fente 9 radiale qui la fend. La fente 9 est un exemple de trou dans la rondelle 3.

La figure 4a est une vue en coupe transversale illustrant les positions de la rondelle 3 et de l'organe fileté 1 lorsque celui-ci est en place dans un ensemble de fixation. La figure 4a illustre un mode de réalisation de la rondelle dans lequel les cannelures 4 sont réparties tout le long d'un cercle le long de la paroi interne 31 de la rondelle 3.

La figure 4b est une vue en coupe transversale illustrant les positions de la rondelle 3 et de l'organe fileté 1 lorsque celui-ci est en place dans un ensemble de fixation selon un autre mode de réalisation de l'invention. La figure 4b illustre un mode de réalisation de la rondelle dans lequel la paroi interne 31 de la rondelle 3 inclut une section circulaire comprenant une partie 39 dépourvue de cannelures et une partie 38 pourvue de cannelures 4.

Les exemples de disposition des cannelures 4 des Figures 4a et 4b sont compatibles avec le premier comme avec le deuxième mode de réalisation de l'invention.

Les figures 4a et 4b illustrent particulièrement bien les cannelures externes 11 de l'organe fileté 1 et les cannelures internes 4 de la rondelle 3. Les cannelures externes 11 définissent des premières dents 12 sur la paroi externe 13 de l'organe fileté 1. Les premières dents 12 sont asymétriques. Les cannelures internes 4 définissent des deuxièmes dents 42 sur la paroi interne 31 de la rondelle 3. Les deuxièmes dents 42 sont aussi asymétriques.

Grâce à l'asymétrie des cannelures internes 4 et externes 11, l'organe fileté 1 peut tourner dans un sens antihoraire, qui est un premier sens de rotation 101 dans cet exemple, par rapport à la rondelle 3. Lors de la rotation dans le premier sens 101, les deuxièmes dents 42 sont repoussées radialement vers l'extérieur par les premières dents 12 sans que cela ne bloque. Par contre, si on essaie de tourner l'organe fileté 1 dans un deuxième sens de rotation, contraire au premier sens de rotation 101, les premières dents 12 se bloqueront dans les deuxième cannelures 4 et les deuxièmes dents 42 se bloqueront dans les cannelures externes 1, empêchant la rotation.

La figure 5 est un agrandissement d'une partie de la figure 4a ou de la figure 4b. Selon le mode de réalisation de l'invention illustré sur ces figures, les cannelures externes 11 comprennent une première 15 et une deuxième 16 parois latérales qui se rejoignent le long d'une ligne. La première paroi latérale 15 est plus longue que la deuxième paroi latérale 16. La première paroi latérale 15 est plus inclinée par rapport au rayon que la deuxième paroi latérale 16. De même, les cannelures internes 4 comprennent une première 45 et une deuxième 46 parois latérales qui se rejoignent le long d'une ligne. La première paroi latérale 45 est plus longue que la deuxième paroi latérale 46. La première paroi latérale 45 est plus inclinée par rapport au rayon que la deuxième paroi latérale 46.

Toute forme asymétrique des cannelures internes 4 et externes 11 est possible tout en restant dans le cadre de l'invention. Il est préférable, mais n'est pas nécessaire, que les cannelures externes 11 soient complémentaires des cannelures internes 4.

La figure 6 est une vue schématique tridimensionnelle d'un anneau 8 selon un mode de réalisation de l'invention. L'anneau 8 peut être utilisé comme moyen de retenue longitudinale, ou élément de retenue longitudinal, dans le premier et dans le deuxième mode de réalisation de l'invention. L'anneau 8 est de préférence élastique. L'anneau 8 peut comprendre une fente 81.

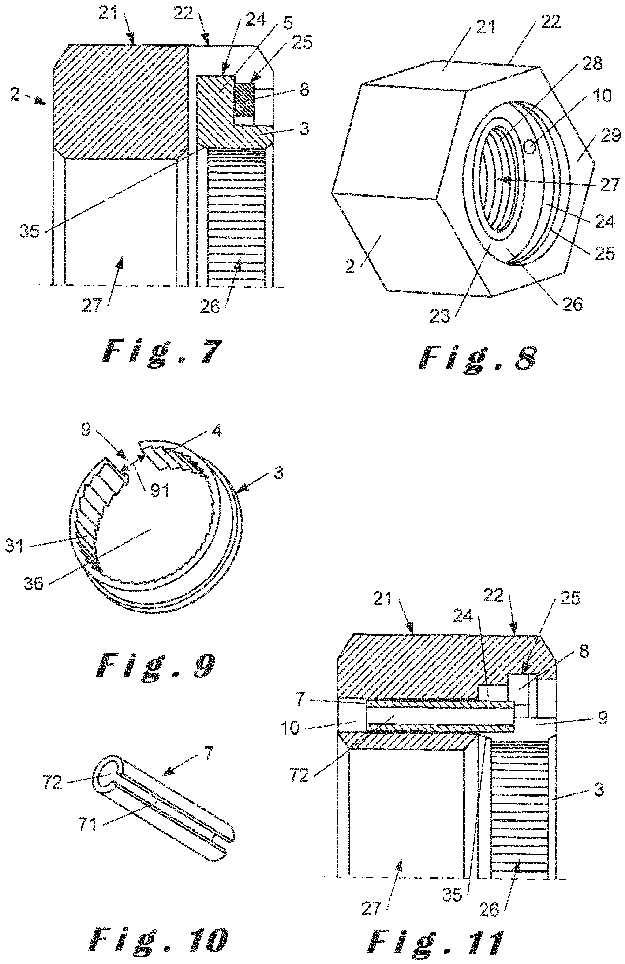

La figure 7 est une vue en coupe d'un exemple d'ensemble de fixation selon le premier mode de réalisation de l'invention. La rondelle 3 a été introduite dans la cavité 26 à l'arrière de l'écrou 2, par la face arrière 29 de l'écrou 2, de façon à ce que les pattes 5 soient au moins partiellement logées dans les encoches 6.

Le blocage en rotation des pattes 5 dans les encoches 6 permet de bloquer la rotation de la rondelle 3 par rapport à l'écrou 2. La rondelle 3 est bloquée vers l'avant par la paroi transversale 23. La paroi extérieure de la rondelle 3 s'insère de préférence dans la deuxième rainure 24.

Lors de son introduction dans la cavité 26, la rondelle 3 peut être compressée radialement de façon à ce que son diamètre diminue. Elle reprend son diamètre « de repos » lorsque la compression radiale cesse, de façon à prendre sa place dans la deuxième rainure 24.

L'anneau 8 a ensuite été introduit dans la cavité 6 par la face arrière 29 de l'écrou 2, de façon à ce qu'il soit à l'opposé de la rondelle 3 par rapport au trou fileté 27. La rondelle 3 est bloquée vers l'arrière par l'anneau 8. La paroi extérieure de l'anneau 8 s'insère de préférence dans la première rainure 25.

Lors de son introduction dans la cavité 26, l'anneau 8 peut être compressé radialement de façon à ce que son diamètre diminue. Il reprend son diamètre « de repos » lorsque la compression radiale cesse, de façon à prendre sa place dans la première rainure 25.

Lorsque la rondelle 3 et l'anneau 8 sont en place dans l'écrou 2, l'ensemble de fixation est monté. Il peut être transporté aisément sans risquer que les différentes pièces ne se désolidarisent. L'organe fileté 1 peut ensuite être introduit dans l'ensemble de fixation, par l'avant. Il se visse d'abord dans le trou 27 de l'écrou. Quand il arrive à la rondelle, sa rotation est possible dans le premier sens 101, comme illustré à la figure 4. Lorsque le couple voulu est obtenu, l'organe fileté 1 reste en place, à ce couple, et il n'est pas possible de le dévisser à cause des cannelures asymétriques.

Pour dévisser l'organe fileté 1, il faut enlever l'anneau 8, puis la rondelle 3 par l'arrière. Cela peut se faire aisément avec un tournevis ou avec une clé hexagonale par exemple. Il est alors possible de dévisser l'organe fileté 1 par l'avant. Toutes les pièces peuvent ensuite être réutilisées de nombreuses fois : elles ne sont pas endommagées par le démontage.

La figure 7 permet aussi d'illustrer un chanfrein 35 situé à l'extrémité extrémité du trou 36 de la rondelle 3 dirigée vers le trou 27 de l'écrou.

La figure 8 illustre un écrou 2 selon un deuxième mode de réalisation de l'invention. L'écrou 2 selon le deuxième mode de réalisation de l'invention ne diffère de l'écrou 2 selon le premier mode de réalisation de l'invention que par les caractéristiques suivantes : il ne comprend préférentiellement pas d'encoches 6 et il comprend un trou 10 qui débouche dans la cavité 26. Le trou 10 débouche de préférence par la paroi transversale 23, de préférence dans la deuxième rainure 24. Le trou 10 est de préférence cylindrique et longitudinal. Il est de préférence traversant, de façon à aussi déboucher sur la face avant de l'écrou 2.

La figure 9 illustre une rondelle 3 selon le deuxième mode de réalisation de l'invention. La rondelle 3 selon le deuxième mode de réalisation de l'invention ne diffère de la rondelle 3 selon le premier mode de réalisation de l'invention que par les caractéristiques suivantes : elle ne comprend préférentiellement pas de pattes 5. La figure 9 illustre une largeur 91 de la fente 9. De préférence, la largeur 91 de la fente 9 est essentiellement égale au diamètre du trou 10.

La figure 10 illustre une goupille 7 qui peut faire partie de l'ensemble de fixation selon le deuxième mode de réalisation de l'invention. La goupille 7 comprend de préférence un trou 72 longitudinal et une fente 71 longitudinale qui débouche dans le trou 72. Les dimensions de la goupille 7 sont choisies pour qu'elle puisse être insérée dans le trou 10 de l'écrou 2 lorsqu'elle est compressée radialement, et se bloquer dans ce trou 10 lorsqu'elle n'est plus compressée radialement.

Le diamètre extérieur de la goupille 7 est inférieur à la largeur 91 de la fente 9. Ainsi, une extrémité de la goupille 7 peut être insérée dans la fente 9 pour bloquer la rotation de la rondelle 3.

La figure 11 est une vue en coupe d'un exemple d'ensemble de fixation selon le deuxième mode de réalisation de l'invention. La rondelle 3 a été introduite dans la cavité 26 à l'arrière de l'écrou 2, par la face arrière 29 de l'écrou 2, de façon à ce que la fente 9 soit en face du trou 10. La rondelle 3 est bloquée vers l'avant par la paroi transversale 23. La paroi extérieure de la rondelle 3 s'insère de préférence dans la deuxième rainure 24.

Lors de son introduction dans la cavité 26, la rondelle 3 peut être compressée radialement de façon à ce que son diamètre diminue. Elle reprend son diamètre « de repos » lorsque la compression radiale cesse, de façon à prendre sa place dans la deuxième rainure 24.

La goupille 7 a ensuite été introduite dans le trou 10, par l'avant ou l'arrière. Une de ses extrémités dépasse du trou 10, de façon à être dans la fente 9, ce qui permet de bloquer la rondelle 3 en rotation par rapport à l'écrou 2.

L'anneau 8 a ensuite été introduit dans la cavité 6 par la face arrière 29 de l'écrou 2, de façon à ce qu'il soit à l'opposé de la rondelle 3 par rapport au trou fileté 27. La rondelle 3 est bloquée vers l'arrière par l'anneau 8. La paroi extérieure de l'anneau 8 s'insère de préférence dans la première rainure 25.

Lors de son introduction dans la cavité 26, l'anneau 8 peut être compressé radialement de façon à ce que son diamètre diminue. Il reprend son diamètre « de repos » lorsque la compression radiale cesse, de façon à prendre sa place dans la première rainure 25.

La goupille 7 peut être introduite dans le 10 avant que la rondelle 3 ne soit introduite dans la cavité 26, ou après que l'anneau 8 ne soit introduit dans la cavité 26.

Lorsque la rondelle 3, la goupille 7 et l'anneau 8 sont en place dans l'écrou 2, l'ensemble de fixation est monté. Il peut être transporté aisément sans risquer que les différentes pièces ne se désolidarisent.

L'organe fileté 1 peut ensuite être introduit dans l'ensemble de fixation, par l'avant. Il se visse d'abord dans le trou 27 de l'écrou. Quand il arrive à la rondelle, sa rotation est possible dans le premier sens 101, comme illustré à la figure 4. Lorsque le couple voulu est obtenu, l'organe fileté 1 reste en place, à ce couple, et il n'est pas possible de le dévisser à cause des cannelures asymétriques.

Pour dévisser l'organe fileté 1, il est possible d'enlever l'anneau 8, puis la rondelle 3 par l'arrière. Cela peut se faire aisément avec un tournevis par exemple. Il est alors possible de dévisser l'organe fileté 1 par l'avant. Il est aussi possible de pousser la goupille 7 de façon à ce qu'elle ne bloque plus la rondelle 3 en rotation, puis de dévisser l'organe fileté 1. La rondelle 3 sera alors poussée longitudinalement le long des cannelures de l'organe fileté 1. Toutes les pièces peuvent ensuite être réutilisées de nombreuses fois : elles ne sont pas endommagées par le démontage.

L'homme du métier comprendrait aisément que certaines caractéristiques présentées ici comme faisant partie du premier mode de réalisation de l'invention sont combinables avec des caractéristiques présentées comme faisant partie du deuxième mode de réalisation de l'invention. Par exemple, il est possible de combiner les pattes 5 et encoches 6 avec la goupille 7 et le trou 10.

Dans un mode de réalisation de l'invention, deux cannelures successives de la rondelle sont distantes d'un angle d'environ 7,35°.

Dans un mode de réalisation de l'invention, l'ensemble de fixation comprend des cannelures additionnelles décalées angulairement et longitudinalement par rapport à au moins certaines des cannelures 4 de la rondelle 3.

Ces cannelures additionnelles peuvent par exemple être présentes sur une deuxième rondelle disposée au moins partiellement dans la cavité 6 à la suite de la première rondelle 3. De préférence, la deuxième rondelle est alors identique à la première rondelle 3 à la différence que ses cannelures, qui sont des cannelures additionnelles, sont décalées angulairement par rapport aux cannelures 4 de la première rondelle 3.

Si l'écrou 2 comprend une deuxième rainure 24 destinée à recevoir la première rondelle 3, il est préféré que cette rainure 24 soit assez profonde pour loger, au moins partiellement, la deuxième rondelle.

Si la première rondelle 3 comprend des pattes 5 et l'écrou 2 des encoches 6, il est préféré que la deuxième rondelle comprenne aussi des pattes et que les encoches 6 soient suffisamment profondes pour accueillir les pattes des deux rondelles. Les pattes et les cannelures de la deuxième rondelle sont alors disposées pour qu'il existe un décalage angulaire entre les cannelures de la première et la deuxième rondelle lorsque les pattes des deux rondelles sont alignées.

Si l'écrou 2 comprend un trou 10 pour une goupille 7, il est préféré que la goupille 7 soit assez longue pour s'insérer dans une fente 9 de la première rondelle 3 et dans une fente de la deuxième rondelle. La fente et les cannelures de la deuxième rondelle sont alors disposées pour qu'il existe un décalage angulaire entre les cannelures de la première et la deuxième rondelle lorsque les fentes des deux rondelles sont alignées.

L'ensemble de fixation peut comprendre une troisième rondelle, éventuellement une quatrième rondelle,... les cannelures de chaque rondelle étant décalées angulairement les unes par rapport aux autres.

Il est possible, tout en restant dans le cadre de l'invention, de combiner le premier et le deuxième mode de réalisation de l'invention. Par exemple, l'ensemble de fixation peut comprendre une encoche 6 et une patte 5 tels que décrits en référence au premier mode de réalisation de l'invention et une goupille 7, un trou 10 dans l'écrou 2 et un trou, par exemple une fente 9, dans la rondelle 3 tels que décrits en référence au deuxième mode de réalisation de l'invention.

En d'autres termes, l'invention se rapporte à un système de fixation comprenant un organe fileté 1 et un ensemble de fixation destiné à recevoir au moins partiellement l'organe fileté 1. L'ensemble de fixation comprend un écrou 2 et une rondelle 3. L'écrou 2 comprend un corps 21 creux et fileté et une jupe 22 agencée pour recevoir au moins partiellement la rondelle 3. La rondelle 3 et l'organe fileté 1 comprennent des cannelures 11, 4 asymétriques qui permettent que l'organe fileté 1 tourne dans un seul sens 101 par rapport à la rondelle 3, et donc à l'ensemble de fixation.

La présente invention a été décrite en relation avec des modes de réalisations spécifiques, qui ont une valeur purement illustrative et ne doivent pas être considérés comme limitatifs. D'une manière générale, la présente invention n'est pas limitée aux exemples illustrés et/ou décrits ci-dessus. L'usage des verbes « comprendre », « inclure », « comporter », ou toute autre variante, ainsi que leurs conjugaisons, ne peut en aucune façon exclure la présence d'éléments autres que ceux mentionnés. L'usage de l'article indéfini « un », « une », ou de l'article défini « le », « la » ou « l' », pour introduire un élément n'exclut pas la présence d'une pluralité de ces éléments. Les numéros de référence dans les revendications ne limitent pas leur portée.

## Revendications

1. Ensemble de fixation destiné à recevoir un organe fileté (1) et comprenant:
- une rondelle (3) ayant une paroi interne (31) pourvue de cannelures (4),
- un écrou (2) agencé pour recevoir au moins une partie de la rondelle (3),
l'ensemble de fixation étant agencé pour que la rondelle (3) soit bloquée longitudinalement et en rotation lorsqu'elle est au moins partiellement reçue dans l'écrou (2),
**caractérisé en ce que** les cannelures (4) de la rondelle (3) sont asymétriques et agencées pour permettre une rotation de l'organe fileté (1 ) dans un seul sens de rotation (101).

2. Ensemble de fixation selon la revendication 1, dans lequel la rondelle (3) est élastique.

3. Ensemble de fixation selon l'une quelconque des revendications précédentes, dans lequel la rondelle (3) est fendue.

4. Ensemble de fixation selon l'une quelconque des revendications précédentes, comprenant un élément de retenue agencé pour bloquer longitudinalement la rondelle (3) dans l'écrou (2).

5. Ensemble de fixation selon la revendication précédente, dans lequel l'élément de retenue est un anneau (8), de préférence fendu, et l'écrou (2) comprend une première rainure (25) agencée pour loger au moins partiellement l'anneau (8).

6. Ensemble de fixation selon l'une quelconque des revendications précédentes, comprenant un moyen de blocage rotationnel de la rondelle.

7. Ensemble de fixation selon la revendication précédente, dans lequel le moyen de blocage rotationnel comprend:
• une encoche (6) dans l'écrou (2), l'encoche (6) débouchant dans une cavité (26) de l'écrou (2) agencée pour recevoir une partie de la rondelle (3), et
• une patte (5) de la rondelle (3),
la patte (5) et l'encoche (6) étant agencées pour empêcher une rotation de la rondelle (3) lorsque la patte (5) est logée au moins partiellement dans l'encoche (6).

8. Ensemble de fixation selon la revendication 6 ou 7, dans lequel le moyen de blocage rotationnel comprend:
• une goupille (7),
• un trou (10) dans l'écrou (2) agencé pour recevoir au moins une partie de la goupille (7) et débouchant dans une cavité (26) de l'écrou (2) agencée pour recevoir au moins une partie de la rondelle (3), et
• un trou dans la rondelle (3) agencé pour recevoir une extrémité de la goupille (7).

9. Ensemble de fixation selon la revendication précédente, dans lequel la goupille (7) comprend une fente longitudinale (71).

10. Ensemble de fixation selon l'une quelconque des revendications précédentes, dans lequel la paroi interne (31) de la rondelle (3) inclut une section circulaire comprenant une partie (39) dépourvue de cannelures et une partie (38) pourvue de cannelures (4).

11. Ensemble de fixation selon l'une quelconque des revendications précédentes, comprenant des cannelures additionnelles en décalage angulaire et longitudinal par rapport à certaines cannelures (4) de la paroi interne (31) de la rondelle (3).

12. Ensemble de fixation selon l'une quelconque des revendications précédentes, dans lequel la rondelle (3) comporte un chanfrein (35) situé à une extrémité d'un trou (36) traversant de la rondelle (3) agencé pour recevoir au moins partiellement l'organe fileté (1).

13. Système de fixation comprenant un ensemble de fixation selon l'une quelconque des revendications 1 à 12 et un organe fileté (1) comprenant une paroi externe (13) pourvue de cannelures (11) asymétriques et agencées pour permettre une rotation de l'ensemble de fixation dans un seul sens de rotation, la rondelle (3) étant assemblée avec l'écrou (2) pour former au moins une partie de l'ensemble de fixation et l'organe fileté (1) étant vissé dans l'ensemble de fixation.

14. Méthode de fixation d'un organe fileté (1) et comprenant les étapes de:
• fournir un ensemble de fixation selon l'une quelconque des revendications 1 à 12,
• fournir l'organe fileté (1), qui comprend une paroi externe (13) pourvue de cannelures (11) asymétriques, agencées pour permettre une rotation de l'ensemble de fixation dans un seul sens de rotation et prévues pour coopérer avec celles de la rondelle (3),
• monter l'ensemble de fixation en insérant, au moins partiellement, la rondelle (3) dans l'écrou (2) de façon à ce que la rondelle (3) soit bloquée longitudinalement et en rotation dans l'écrou (2), et
• visser l'organe fileté (1) dans l'ensemble de fixation par une rotation dans ledit sens de rotation (101).

## Patentansprüche

1. Befestigungsanordnung, die dazu bestimmt ist, ein Gewindeelement (1) aufzunehmen, und die Folgendes umfasst:
- eine Unterlegscheibe (3), die eine mit Rillen (4) versehene Innenwand (31) aufweist,
- eine Mutter (2), die angeordnet ist, um mindestens einen Teil der Unterlegscheibe (3) aufzunehmen,
wobei die Befestigungsanordnung angeordnet ist, damit die Unterlegscheibe (3) in Längsrichtung und gegen Drehung blockiert wird, wenn sie mindestens teilweise in der Mutter (2) aufgenommen ist,
**dadurch gekennzeichnet, dass** die Rillen (4) der Unterlegscheibe (3) asymmetrisch und angeordnet sind, um eine Drehung des Gewindeelements (1) in einer einzigen Drehrichtung (101) zu erlauben.

2. Befestigungsanordnung nach Anspruch 1, wobei die Unterlegscheibe (3) elastisch ist.

3. Befestigungsanordnung nach einem der vorstehenden Ansprüche, wobei die Unterlegscheibe (3) geschlitzt ist.

4. Befestigungsanordnung nach einem der vorstehenden Ansprüche, umfassend ein Halteelement, das angeordnet ist, um die Unterlegscheibe (3) in der Mutter (2) in Längsrichtung zu blockieren.

5. Befestigungsanordnung nach dem vorstehenden Anspruch, wobei das Halteelement ein Ring (8) ist, der vorzugsweise geschlitzt ist, und die Mutter (2) eine erste Nut (25) umfasst, die angeordnet ist, um den Ring (8) zumindest teilweise aufzunehmen.

6. Befestigungseinrichtung nach einem der vorstehenden Ansprüche, umfassend ein Drehblockiermittel der Unterlegscheibe.

7. Befestigungsanordnung nach dem vorstehenden Anspruch, wobei das Drehblockiermittel Folgendes umfasst:
- eine Kerbe (6) in der Mutter (2), wobei die Kerbe (6) in einen Hohlraum (26) in der Mutter (2) mündet, der angeordnet ist, um einen Teil der Unterlegscheibe (3) aufzunehmen, und
- eine Lasche (5) der Unterlegscheibe (3),
wobei die Lasche (5) und die Kerbe (6) angeordnet sind, um eine Drehung der Unterlegscheibe (3) zu verhindern, wenn die Lasche (5) zumindest teilweise in der Kerbe (6) aufgenommen ist.

8. Befestigungsanordnung nach Anspruch 6 oder 7, wobei das Drehblockiermittel Folgendes umfasst:
- einen Stift (7),
- ein Loch (10) in der Mutter (2), das angeordnet ist, um mindestens einen Teil des Stifts (7) aufzunehmen, und das in einen Hohlraum (26) der Mutter (2) mündet, der angeordnet ist, um mindestens einen Teil der Unterlegscheibe (3) aufzunehmen, und
- ein Loch in der Unterlegscheibe (3), das angeordnet ist, um ein Ende des Stifts (7) aufzunehmen.

9. Befestigungsanordnung nach dem vorstehenden Anspruch, wobei der Stift (7) einen länglichen Schlitz (71) umfasst.

10. Befestigungsanordnung nach einem der vorstehenden Ansprüche, wobei die Innenwand (31) der Unterlegscheibe (3) einen kreisförmigen Abschnitt beinhaltet, der einen Teil (39) ohne Rillen und einen Teil (38) mit Rillen (4) umfasst.

11. Befestigungsanordnung nach einem der vorstehenden Ansprüche, umfassend zusätzliche Rillen, die in Bezug auf bestimmte Rillen (4) in der Innenwand (31) der Unterlegscheibe (3) winkelmäßig und länglich versetzt sind.

12. Befestigungsanordnung nach einem der vorstehenden Ansprüche, wobei die Unterlegscheibe (3) eine Abschrägung (35) aufweist, die sich an einem Ende eines die Unterlegscheibe (3) durchquerenden Lochs (36) befindet, das angeordnet ist, um zumindest teilweise das Gewindeelement (1) aufzunehmen.

13. Befestigungssystem, umfassend eine Befestigungsanordnung nach einem der Ansprüche 1 bis 12 und ein Gewindeelement (1), das eine Außenwand (13) umfasst, die mit asymmetrischen Rillen (11) versehen und angeordnet ist, um eine Drehung der Befestigungsanordnung in nur einer Drehrichtung zu erlauben, wobei die Unterlegscheibe (3) mit der Mutter (2) zusammengebaut ist, um mindestens einen Teil der Befestigungsanordnung zu bilden, und wobei das Gewindeelement (1) in die Befestigungsanordnung eingeschraubt ist.

14. Verfahren zum Befestigen eines Gewindeelements (1) und umfassend die folgenden Schritte:
- Bereitstellen einer Befestigungsanordnung nach einem der Ansprüche 1 bis 12,
- Bereitstellen des Gewindeelements (1), das eine Außenwand (13) umfasst, die mit asymmetrischen Rillen (11) versehen ist, die angeordnet sind, um eine Drehung der Befestigungsanordnung in einer einzigen Drehrichtung zu erlauben, und die vorgesehen sind, um mit denjenigen der Unterlegscheibe (3) zusammenzuwirken,
- Montieren der Befestigungsanordnung durch zumindest teilweises Einsetzen der Unterlegscheibe (3) in die Mutter (2), so dass die Unterlegscheibe (3) in der Mutter (2) in Längsrichtung und gegen Drehung blockiert ist, und
- Einschrauben des Gewindeelements (1) in die Befestigungsanordnung durch eine Drehung in der Drehrichtung (101).

## Claims

1. Attachment assembly intended to receive a threaded member (1) and comprising:
- a washer (3) having an internal wall (31) provided with flutes (4),
- a nut (2) arranged to receive at least one part of the washer (3),
the attachment assembly being arranged such that the washer (3) is blocked longitudinally and rotatably, when it is at least partially received in the nut (2),
**characterized in that** the flutes (4) of the washer (3) are asymmetrical and arranged to enable a rotation of the threaded member (1) in one single direction of rotation (101).

2. Attachment assembly according to claim 1, wherein the washer (3) is elastic.

3. Attachment assembly according to any one of the preceding claims, wherein the washer (3) is split.

4. Attachment assembly according to any one of the preceding claims, comprising a retaining element arranged to longitudinally block the washer (3) in the nut (2).

5. Attachment assembly according to the preceding claim, wherein the retaining element is a ring (8), preferably split, and the nut (2) comprises a first groove (25) arranged to at least partially house the ring (8).

6. Attachment assembly according to any one of the preceding claims, comprising a means for rotationally blocking the washer.

7. Attachment assembly according to the preceding claim, wherein the rotational blocking means comprises:
- a notch (6) in the nut (2), the notch (6) opening into a cavity (26) of the nut (2) arranged to receive a part of the washer (3), and
- a tab (5) of the washer (3),
the tab (5) and the notch (6) being arranged to prevent a rotation of the washer (3) when the tab (5) is housed at least partially in the notch (6).

8. Attachment assembly according to claim 6 or 7, wherein the rotational blocking means comprises:
- a pin (7),
- a hole (10) in the nut (2) arranged to receive at least one part of the pin (7) and opening into a cavity (26) of the nut (2) arranged to receive at least one part of the washer (3), and
- a hole in the washer (3) arranged to receive an end of the pin (7).

9. Attachment assembly according to the preceding claim, wherein the pin (7) comprises a longitudinal slot (71).

10. Attachment assembly according to any one of the preceding claims, wherein the internal wall (31) of the washer (3) includes a circular cross-section comprising a part (39) with no flutes and a part (38) provided with flutes (4).

11. Attachment assembly according to any one of the preceding claims, comprising additional flutes angularly and longitudinally offset with respect to certain flutes (4) of the internal wall (31) of the washer (3).

12. Attachment assembly according to any one of the preceding claims, wherein the washer (3) comprises a chamfer (35) located at an end of a through hole (36) of the washer (3) arranged to receive at least partially the threaded member (1).

13. Attachment system comprising an attachment assembly according to any one of claims 1 to 12 and a threaded member (1) comprising an external wall (13) provided with asymmetrical flutes (11), and arranged to enable a rotation of the attachment assembly in one single direction of rotation, the washer (3) being assembled with the nut (2) to form at least one part of the attachment assembly and the threaded member (1) being screwed in the attachment assembly.

14. Method for attaching a threaded member (1) and comprising the steps of:
- providing an attachment assembly according to any one of claims 1 to 12,
- providing the threaded member (1), which comprises an external wall (13) provided with asymmetrical flutes (11), arranged to enable a rotation of the attachment assembly in one single direction of rotation and provided to engage with those of the washer (3),
- mounting the attachment assembly by inserting, at least partially, the washer (3) in the nut (2) such that the washer (3) is longitudinally and rotatably blocked in the nut (2), and
- screwing the threaded member (1) in the attachment assembly by a rotation in said direction of rotation (101).
